# DEMANDE DE BREVET EUROPEEN

(11) **EP 4 382 343 A1**
(43) Date de publication de la demande: **12.06.2024**
(21) Numéro de dépôt: 23215359.3
(22) Date de dépôt: 08.12.2023
(51) Int. Cl.: B60L 15/00, B60L 1/00, H02J 1/08, H02M 7/08, H02M 1/00, H02M 3/335, H02M 7/06, H02M 7/5387

(54) **SYSTÈME D'ALIMENTATION ÉLECTRIQUE ALIMENTANT UNE CHARGE ÉLECTRIQUE VIA UNE TENSION POLYPHASÉE ET EN OUTRE UN RÉSEAU AUXILIAIRE VIA UNE COMPOSANTE HOMOPOLAIRE DE LADITE TENSION, INSTALLATION ÉLECTRIQUE ASSOCIÉE**

(30) Priorité: 09.12.2022 FR 2213081
(71) Demandeur: Commissariat à l'énergie atomique et aux énergies alternatives, 75015 Paris (FR)
(72) Inventeur: DESPESSE, Ghislain, 38054 GRENOBLE CEDEX 9 (FR); BLATTER, Jérôme, 38054 GRENOBLE CEDEX 9 (FR)
(74) Mandataire: Lavoix

(57) **Abrégé**

Ce système d'alimentation (15) comprend un dispositif principal d'alimentation (20) générant, à partir d'un réseau principal (14), au moins une tension polyphasée pour alimenter au moins une charge (12) ; chaque charge (12) comportant un enroulement (30) pour chaque phase, les enroulements (30) étant connectés en étoile en un point milieu (32) ; et un dispositif auxiliaire (25) d'alimentation d'un réseau auxiliaire (28) comportant une première (60) et une deuxième (62) bornes d'alimentation.

Le dispositif principal d'alimentation (20) est configuré pour générer l'au moins une tension polyphasée avec au moins une composante homopolaire non nulle ; et le dispositif auxiliaire d'alimentation (25) comprend un module de raccordement (65) de la première borne d'alimentation (60) avec le point milieu (32) et de la deuxième borne d'alimentation (62) avec un point de référence (68), pour alimenter le réseau auxiliaire (28) via l'au moins une composante homopolaire issue du point milieu (32).

## Description

La présente invention concerne un système d'alimentation électrique comprenant un dispositif principal d'alimentation d'au moins une charge électrique, via au moins une tension polyphasée et à partir d'un réseau électrique principal ; et un dispositif auxiliaire d'alimentation d'un réseau électrique auxiliaire.

L'invention concerne aussi une installation électrique comprenant l'au moins une charge électrique, le réseau électrique principal, et un tel système d'alimentation électrique.

L'invention concerne le domaine de l'alimentation de réseaux électriques auxiliaires, en particulier de réseaux auxiliaires continus à bord de véhicules, pour lesquels la tension d'alimentation continue à fournir est typiquement inférieure ou égale à 48 V. La tension continue du réseau auxiliaire est par exemple généralement de l'ordre de 12 à 14 V lorsque le véhicule est une voiture, et de l'ordre de 24 à 28 V lorsque le véhicule est un camion.

L'invention concerne également le domaine du transport à traction électrique, et de la conversion d'énergie pour des moteurs électriques à vitesse variable, le dispositif principal d'alimentation électrique étant typiquement connecté à la batterie principale d'un véhicule électrique, ladite batterie formant le réseau électrique principal. Le réseau électrique principal est typiquement un réseau électrique continu avec une tension continue de l'ordre de 400 V, ou encore de l'ordre de 800 V, ou de manière plus générale toute tension continue de valeur bien plus élevée que la tension du réseau électrique auxiliaire. Le ratio entre la tension maximale du réseau électrique principal et la tension maximale du réseau électrique auxiliaire est typiquement supérieur à quatre.

Actuellement, l'alimentation d'un réseau électrique auxiliaire d'un véhicule électrique est généralement effectuée à partir d'un bus continu alimenté par la batterie principale du véhicule, via un convertisseur continu-continu, également appelé convertisseur DC-DC (de l'anglais *Direct Current* - *Direct Current*), disposé entre le bus continu et le réseau auxiliaire. Le convertisseur continu-continu convertit alors la tension continue issue du bus continu à une tension bien plus basse, telle qu'une tension de l'ordre de 12 V ou 24 V, pour alimenter le réseau auxiliaire. Outre l'ajustement de la tension et du courant, le convertisseur continu-continu sert aussi parfois à assurer une isolation galvanique entre le bus continu et le réseau auxiliaire. Ce convertisseur continu-continu est généralement indépendant d'un système d'alimentation électrique du moteur électrique du véhicule.

Une solution alternative à la solution générale précitée est décrite dans le document WO 2013/110649 A2, et consiste à positionner un système de conversion entre le système d'alimentation du moteur et le moteur électrique lui-même, le système d'alimentation étant typiquement formé d'un onduleur de tension apte à convertir la tension continue du bus continu en une tension alternative alimentant le moteur électrique qui est alors un moteur alternatif, typiquement un moteur triphasé. Le système de conversion est alors configuré pour convertir la tension alternative issue de l'onduleur de tension en la tension continue alimentant le réseau auxiliaire.

Toutefois, un tel système de conversion nécessite plusieurs convertisseurs pour pouvoir tirer une puissance équilibrée sur les trois phases de la tension triphasée d'alimentation du moteur, un convertisseur respectif étant connecté à chaque phase en sortie de l'onduleur de tension.

Le but de l'invention est alors de proposer un système d'alimentation électrique qui permette d'alimenter plus simplement le réseau électrique auxiliaire, tout en ne perturbant pas l'alimentation de l'au moins une charge électrique.

A cet effet, l'invention a pour objet un système d'alimentation électrique comprenant :
- un dispositif principal d'alimentation électrique configuré pour générer, à partir d'un réseau électrique principal, au moins une tension polyphasée afin d'alimenter au moins une charge électrique ;
   la ou chaque charge électrique comportant un enroulement pour chaque phase de la tension polyphasée respective, les enroulements étant connectés entre eux en un point milieu, selon une connexion en étoile ;
- un dispositif auxiliaire d'alimentation électrique configuré pour alimenter un réseau électrique auxiliaire, le réseau électrique auxiliaire comportant une première et une deuxième bornes d'alimentation ;
   le dispositif principal d'alimentation étant configuré pour générer l'au moins une tension polyphasée avec au moins une composante homopolaire non nulle, et
   le dispositif auxiliaire d'alimentation comprenant un module de raccordement configuré pour raccorder la première borne d'alimentation avec le point milieu et la deuxième borne d'alimentation avec un point de référence, pour alimenter le réseau électrique auxiliaire via l'au moins une composante homopolaire non nulle, la composante homopolaire respective étant issue du point milieu.

Avec le système d'alimentation selon l'invention, le module de raccordement du dispositif auxiliaire d'alimentation permet alors d'alimenter le réseau auxiliaire de manière simple en raccordant la première borne d'alimentation du réseau auxiliaire au point milieu afin de récupérer l'au moins une composante homopolaire non nulle de la tension polyphasée issue dudit point milieu et générée par le dispositif principal d'alimentation ; et en raccordant la deuxième borne d'alimentation du réseau auxiliaire au point de référence.

Autrement dit, le système d'alimentation selon l'invention permet d'alimenter simplement le réseau auxiliaire, en générant l'au moins une tension polyphasée alimentant l'au moins une charge électrique, telle qu'un moteur électrique, de manière à avoir l'au moins une composante homopolaire non nulle ; puis en exploitant astucieusement l'au moins une composante homopolaire non nulle pour alimenter le réseau auxiliaire.

En d'autres termes encore, l'homme du métier observera que l'au moins une tension polyphasée générée par le dispositif principal alimentation permet d'alimenter à la fois l'au moins une charge électrique et le réseau auxiliaire, l'au moins une charge électrique étant alimentée de manière directe par l'au moins une tension polyphasée, et le réseau auxiliaire étant alimenté de manière indirecte par ladite au moins une tension polyphasée, à savoir via le module de raccordement pour exploiter l'au moins une composante homopolaire non nulle.

Suivant d'autres aspects avantageux de l'invention, le système d'alimentation comprend une ou plusieurs des caractéristiques suivantes, prises isolément ou suivant toutes les combinaisons techniquement possibles :
- le dispositif principal d'alimentation est configuré pour générer une première, et respectivement une deuxième, tensions polyphasées afin d'alimenter une première, et respectivement une deuxième, charges électriques, les enroulements de la première charge étant connectés en étoile en un premier point milieu et les enroulements de la deuxième charge étant connectés en étoile en un deuxième point milieu, le dispositif principal d'alimentation étant configuré pour générer la première tension polyphasée avec une première composante homopolaire, et pour générer la deuxième tension polyphasée avec une deuxième composante homopolaire, au moins l'une des première et deuxième composantes homopolaires étant non nulle,
   le module de raccordement est alors configuré pour raccorder la première borne d'alimentation avec le premier point milieu et la deuxième borne d'alimentation avec le deuxième point milieu, le deuxième point milieu formant le point de référence, pour alimenter le réseau électrique auxiliaire via la première composante homopolaire issue du premier point milieu et via la deuxième composante homopolaire issue du deuxième point milieu ;
- le point de référence est un point sensiblement milieu entre des potentiels fournis par le réseau électrique principal ;
   le point sensiblement milieu ayant de préférence pour potentiel une moyenne des potentiels fournis par le réseau électrique principal à plus ou moins 30% du potentiel maximal parmi lesdits potentiels fournis ;
- le réseau électrique auxiliaire est un réseau électrique continu ;
   la tension continue d'alimentation du réseau électrique auxiliaire étant de préférence comprise entre 12 V et 48 V ;
- la ou chaque composante homopolaire générée par le dispositif principal d'alimentation est continue, et le module de raccordement est configuré pour connecter directement la première borne d'alimentation avec le point milieu et la deuxième borne d'alimentation avec le point de référence ;
- la ou chaque composante homopolaire générée par le dispositif principal alimentation est alternative, et le module de raccordement comporte un redresseur adapté pour convertir la ou chaque composante homopolaire alternative en une tension continue délivrée au réseau électrique auxiliaire ;
   le redresseur comportant de préférence un pont de diodes ; et
- le dispositif auxiliaire d'alimentation comprend en outre un module d'isolation électrique connecté en sortie du module de raccordement et destiné à être connecté en entrée du réseau électrique auxiliaire, le module d'isolation électrique comportant un transformateur électrique avec au moins un enroulement primaire et au moins un enroulement secondaire, un onduleur auxiliaire connecté au(x) enroulement(s) primaire(s) et un redresseur auxiliaire connecté au(x) enroulement(s) secondaire(s).

L'invention concerne également une installation électrique comprenant au moins une charge électrique, un réseau électrique principal et un système d'alimentation électrique,
le système d'alimentation électrique étant tel que défini ci-dessus ; le dispositif principal d'alimentation électrique étant connecté entre le réseau électrique principal et l'au moins une charge électrique pour l'alimenter avec l'au moins une tension polyphasée générée ; la ou chaque charge électrique comportant un enroulement pour chaque phase de la tension polyphasée respective, les enroulements étant connectés entre eux en un point milieu, selon une connexion en étoile.

Suivant d'autres aspects avantageux de l'invention, l'installation électrique comprend une ou plusieurs des caractéristiques suivantes, prises isolément ou suivant toutes les combinaisons techniquement possibles :
- le dispositif principal d'alimentation est configuré pour générer la tension polyphasée avec une composante homopolaire alternative ;
   le dispositif principal d'alimentation étant de préférence configuré pour générer la tension polyphasée avec la composante homopolaire alternative présentant une tension ou un courant de valeur moyenne nulle sur une période temporelle ;
   la période temporelle étant de préférence encore une période de la tension polyphasée ou une portion temporelle d'un cycle de décharge du réseau électrique principal lorsqu'il est en forme d'une batterie ; la portion temporelle étant par exemple choisie parmi : une durée prédéfinie de quelques minutes, un demi-cycle de décharge et le cycle de décharge.
- le dispositif principal d'alimentation est configuré pour générer la tension polyphasée avec la composante homopolaire alternative en utilisant au moins une composante harmonique de rang 3 pour augmenter la valeur crête de la tension alimentant la charge ;
- le réseau électrique principal est un réseau continu apte à fournir une tension continue, et le dispositif principal d'alimentation est configuré pour convertir ladite tension continue en la tension polyphasée ;
- le réseau électrique principal comporte plusieurs sources élémentaires continues, et le dispositif principal d'alimentation comporte plusieurs onduleurs monophasés, chacun étant connecté à une source élémentaire continue respective ;
   le point de référence étant de préférence relié à une borne d'une source élémentaire continue respective ;
   le point de référence étant de préférence encore relié à une borne commune aux sources élémentaires continues ;
- le réseau électrique principal comporte plusieurs sources élémentaires continues, et le dispositif principal d'alimentation comporte un module de reconfiguration dynamique adapté pour générer la tension polyphasée via une reconfiguration dynamique des sources élémentaires continues ;
   le point de référence étant de préférence relié à une borne d'une source élémentaire continue respective ;
   le point de référence étant de préférence encore relié à une borne commune aux sources élémentaires continues ;
- le réseau électrique principal comporte une unique source continue, et le dispositif principal d'alimentation comporte un onduleur polyphasé apte à générer la tension polyphasée à partir de ladite source continue ;
   le point de référence étant de préférence relié à une borne de la source continue ;
- la ou chaque composante homopolaire est alternative ; la source continue comporte un ensemble de plusieurs cellules continues, telles que des cellules de batterie, connectées en série ; et dans lequel le module de raccordement comporte une première diode et une deuxième diode, connectées à un groupe de certaines cellules continues de l'ensemble, le groupe présentant des première et deuxième extrémités, la première diode étant connectée par sa cathode à la première extrémité et par son anode au point milieu pour recevoir la ou chaque composante homopolaire ; la deuxième diode étant connectée par son anode à la deuxième extrémité et par sa cathode au point milieu pour recevoir la ou chaque composante homopolaire ; et le module de raccordement étant configuré en outre pour connecter la première borne d'alimentation avec la première extrémité et la deuxième borne d'alimentation avec la deuxième extrémité ;
   le point de référence étant de préférence relié à une borne d'une cellule continue respective ;
- la ou chaque charge électrique est un moteur électrique comportant un rotor et un stator, les enroulements connectés en étoile étant les enroulements du stator ;
   le moteur électrique étant notamment un moteur synchrone avec un rotor bobiné, dit excitation bobinée, et le dispositif auxiliaire d'alimentation étant alors de préférence configuré pour alimenter en outre le rotor bobiné du moteur synchrone ; et
- la tension polyphasée comporte P phases, P étant un nombre entier supérieur ou égal à 3.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

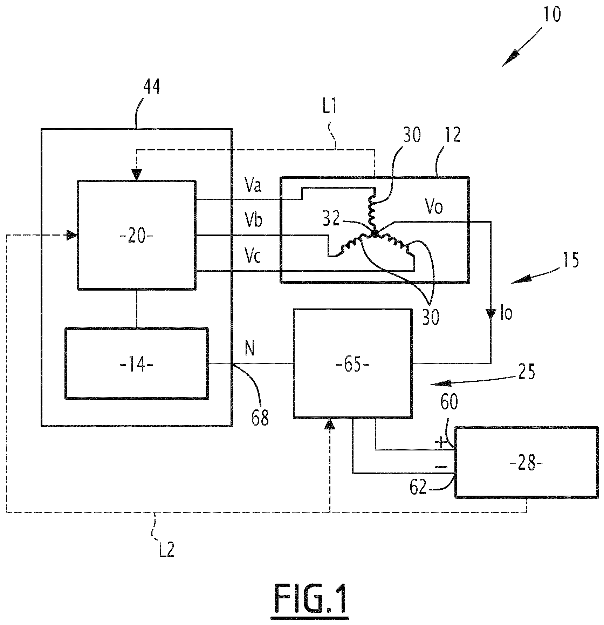

- la figure 1 est une représentation schématique d'une installation électrique selon l'invention, comprenant une charge électrique apte à être alimentée par une tension polyphasée et comportant un enroulement pour chaque phase de la tension polyphasée ; un réseau électrique principal ; un dispositif principal d'alimentation électrique de la charge électrique à partir dudit réseau principal ; et un dispositif auxiliaire d'alimentation électrique d'un réseau électrique auxiliaire comportant une première et une deuxième bornes d'alimentation, le dispositif auxiliaire comportant un module de raccordement desdites première et deuxième bornes pour alimenter le réseau auxiliaire via une composante homopolaire non nulle de la tension polyphasée ;
- la figure 2 est une vue analogue à celle de la figure 1, lorsque le dispositif principal d'alimentation est configuré pour alimenter plusieurs charges électriques, en particulier des première et deuxième charges électriques ;
- la figure 3 est une vue représentant un premier ensemble de courbes de tension pour les différentes phases de la tension polyphasée fournie par le dispositif principal, un deuxième ensemble de courbes représentatives des tensions aux bornes des enroulements de la charge électrique, ainsi qu'une courbe représentative d'une composante homopolaire de la tension polyphasée, selon un premier exemple ;

- la figure 4 est une vue analogue à celle de la figure 3, selon des deuxième et troisième exemples ;
- la figure 5 est une vue analogue à celle de la figure 3, selon des quatrième et cinquième exemples ;
- la figure 6 est une représentation schématique du module de raccordement, selon que la composante homopolaire est continue ou bien alternative ;
- la figure 7 est une représentation schématique de deux exemples de réalisation du dispositif principal d'alimentation électrique lorsqu'il est configuré pour fournir une tension polyphasée pour alimenter au moins une charge électrique ;
- la figure 8 est une vue analogue à celle de la figure 7, lorsque le dispositif principal est configuré pour fournir plusieurs tensions polyphasées pour alimenter plusieurs charges électriques, en particulier les première et deuxième charges électriques ;
- la figure 9 est une représentation schématique d'un exemple de réalisation du module de raccordement lorsque la composante homopolaire est alternative et que le réseau électrique principal comporte une unique source continue formée de plusieurs cellules continues connectées en série ;
- la figure 10 est une représentation schématique du dispositif auxiliaire d'alimentation électrique lorsqu'il comprend en outre un module d'isolation électrique connecté entre le module de raccordement et le réseau auxiliaire ;
- la figure 11 est une représentation schématique d'un exemple de réalisation où la charge électrique est un moteur synchrone à excitation bobinée et le dispositif auxiliaire est adapté pour alimenter en outre l'excitation bobinée du moteur synchrone ; et
- la figure 12 est une représentation schématique d'un autre exemple de réalisation du dispositif principal d'alimentation électrique et du réseau électrique principal.

Dans la suite de la description, l'expression « sensiblement égal(e) à », ou encore « de l'ordre de » définit une relation d'égalité à plus ou moins 20%, de préférence encore à plus ou moins 10%, de préférence encore à plus ou moins 5%.

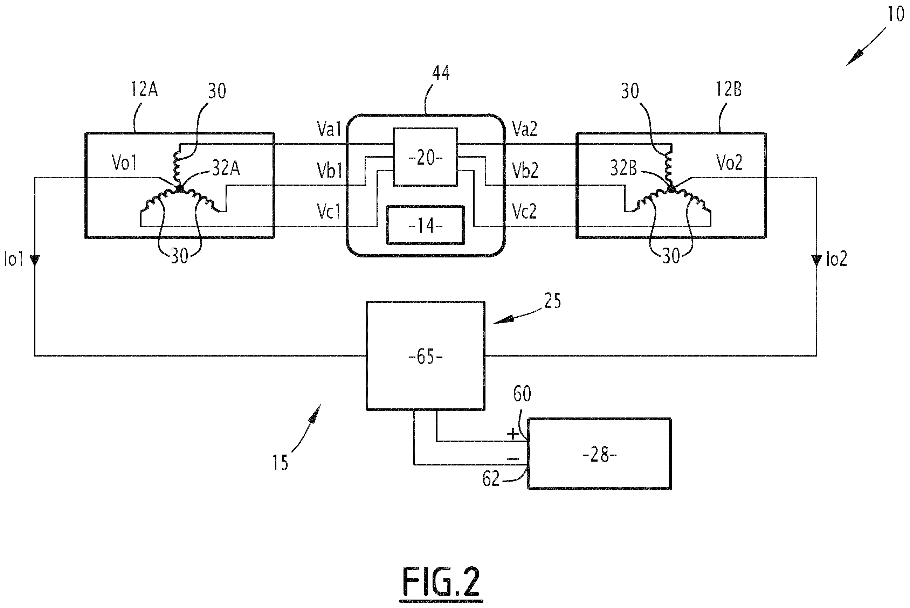

Sur les figures 1 et 2, une installation électrique 10 comprend au moins une charge électrique 12, un réseau électrique principal 14 et un système d'alimentation électrique 15, le système d'alimentation électrique 15 comportant un dispositif principal 20 d'alimentation électrique de l'au moins une charge électrique 12 à partir du réseau électrique principal 14 et un dispositif auxiliaire 25 d'alimentation électrique d'un réseau électrique auxiliaire 28.

En complément facultatif, l'installation électrique 10 comprend une première liaison de rebouclage L1 entre l'au moins une charge électrique 12 et le dispositif principal d'alimentation électrique 20, appelé par la suite dispositif principal d'alimentation 20, la première liaison de rebouclage L1 permettant la transmission d'informations depuis l'au moins une charge électrique 12 vers le dispositif principal d'alimentation 20 pour une régulation de l'alimentation de l'au moins une charge électrique 12.

En complément facultatif encore, l'installation électrique 10 comprend une deuxième liaison de rebouclage L2 entre le réseau électrique auxiliaire 28 et le dispositif principal d'alimentation 20 d'une part, et le dispositif auxiliaire d'alimentation électrique 25 d'autre part, la deuxième liaison de rebouclage L2 permettant la transmission d'informations depuis le réseau électrique auxiliaire 28 vers le dispositif principal d'alimentation 20 et vers le dispositif auxiliaire d'alimentation électrique 25, appelé par la suite dispositif auxiliaire d'alimentation 25, pour une régulation de l'alimentation du réseau électrique auxiliaire 28.

Dans l'exemple de la figure 1, l'installation électrique 10 comprend une seule charge électrique 12.

Dans l'exemple de la figure 2, l'installation électrique 10 comprend plusieurs charges électriques 12, en particulier deux charges électriques 12, à savoir une première charge électrique 12A et un deuxième charge électrique 12B.

La ou chaque charge électrique 12 est configurée pour être alimentée par une tension polyphasée distincte fournie par le dispositif principal d'alimentation 20. La ou chaque charge électrique 12 comporte un enroulement 30 pour chaque phase de la tension polyphasée, les enroulements 30 étant connectés entre eux en un point milieu 32, selon une connexion en étoile, c'est-à-dire selon un branchement en étoile, ou encore selon un couplage en étoile.

Dans l'exemple de la figure 2, les enroulements de la première charge 12A sont connectés en étoile en un premier point milieu 32A, et les enroulements de la deuxième charge 12B sont connectés en étoile en un deuxième point milieu 32B.

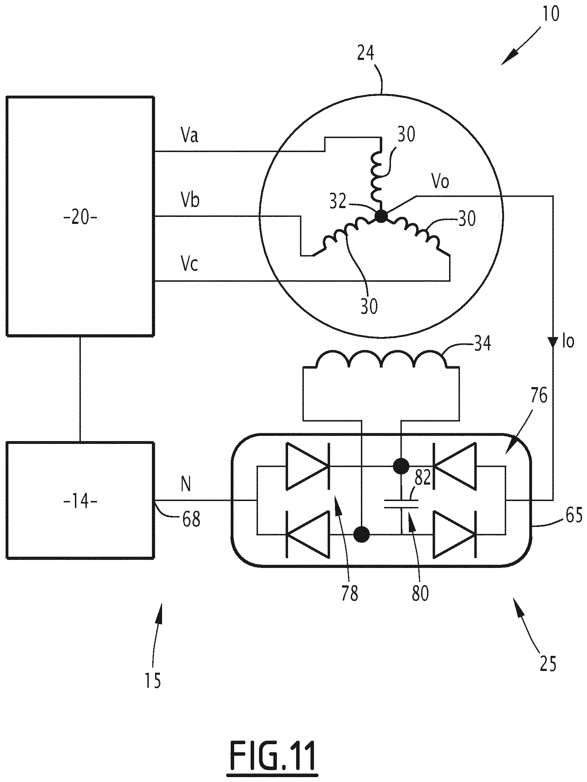

La ou chaque charge électrique 12 est par exemple un moteur électrique comportant, comme connu en soi, un rotor et un stator, non représentés. Les enroulements 30 connectés en étoile sont alors typiquement les enroulements du stator, également appelés enroulements statoriques. Le moteur électrique est un moteur asynchrone, ou encore un moteur synchrone comme dans l'exemple de la figure 11.

Dans l'exemple de la figure 11, la charge électrique 12 est en particulier un moteur synchrone avec un rotor bobiné 34, également appelé excitation bobinée, l'excitation bobinée 34 nécessitant d'être alimentée pour le démarrage du moteur synchrone.

Le réseau électrique principal 14 est typiquement un réseau continu apte à fournir une tension continue. La tension continue du réseau électrique principal 14 est par exemple de l'ordre de 400 V, ou encore de l'ordre de 800 V, ou de manière plus générale une tension de valeur bien plus élevée que celle du réseau électrique auxiliaire 28. Le ratio entre la tension maximale du réseau électrique principal 14 et la tension maximale du réseau électrique auxiliaire 28 est typiquement supérieur à quatre.

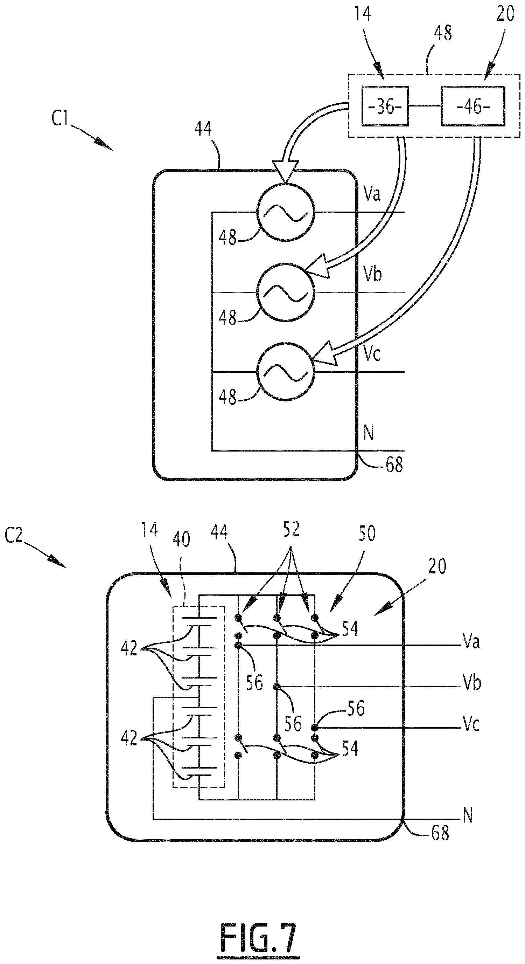

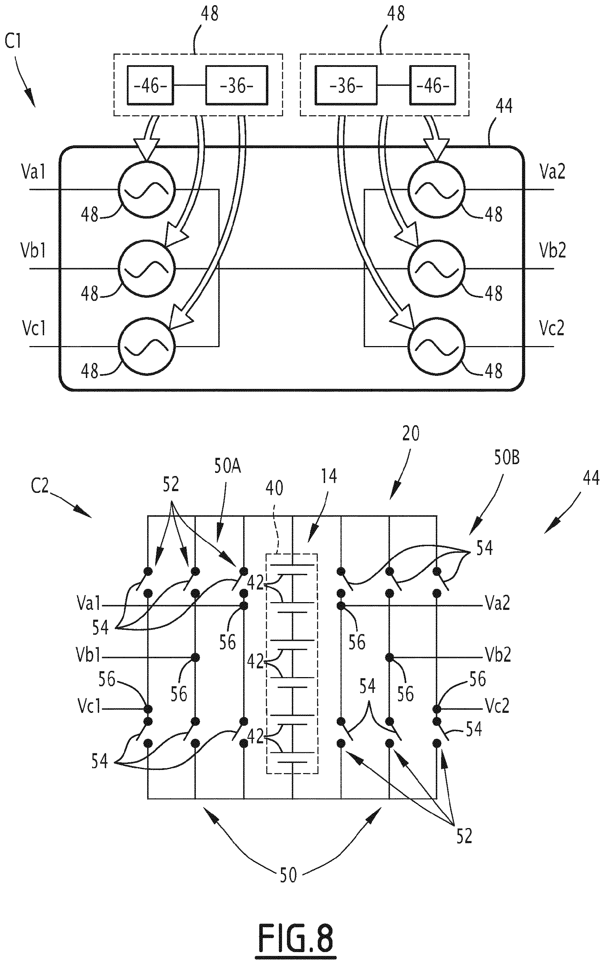

Dans les exemples des figures 7 et 8, selon une première configuration C1, le réseau électrique principal 14 comporte plusieurs sources élémentaires continues 36, chacune permettant typiquement ensuite la génération d'une phase respective de la tension polyphasée.

Dans les exemples des figures 7 et 8, selon une deuxième configuration C2, le réseau électrique principal 14 comporte une unique source continue 40, formée par exemple d'un ensemble de plusieurs cellules continues 42, telles que des cellules de batterie, connectées en série.

Le système d'alimentation électrique 15 est configuré pour alimenter à la fois l'au moins une charge électrique 12 et le réseau électrique auxiliaire 28, ceci à partir du réseau électrique principal 14. Le système d'alimentation électrique 15 comprend alors le dispositif principal d'alimentation 20 pour l'alimentation de l'au moins une charge électrique 12 et le dispositif auxiliaire d'alimentation 25 pour l'alimentation du réseau auxiliaire 28.

Le dispositif principal d'alimentation 20 est configuré pour générer, à partir du réseau électrique principal 14, au moins une tension polyphasée afin d'alimenter l'au moins une charge électrique 12. La ou chaque tension polyphasée comporte P phases, P étant un nombre entier supérieur ou égal à 3.

Le dispositif principal d'alimentation 20 et le réseau électrique principal 14 forment un ensemble principal d'alimentation 44, comme représenté sur les figure 1 et 2.

Selon l'invention, le dispositif principal d'alimentation 20 est configuré pour générer l'au moins une tension polyphasée avec au moins une composante homopolaire non nulle.

Dans l'exemple de la figure 1, la tension polyphasée est une tension triphasée, et les tensions de chacune des trois phases sont notées respectivement Va, Vb, Vc. La tension de la composante homopolaire est notée Vo, et son courant est noté lo.

Dans l'exemple de la figure 2, le dispositif principal d'alimentation 20 est configuré pour générer une première, et respectivement une deuxième, tensions polyphasées afin d'alimenter la première 12A, et respectivement la deuxième 12B, charges électriques. La première tension polyphasée et la deuxième tension polyphasée sont chacune une tension triphasée ; et les tensions de chacune des trois phases de la première tension polyphasée sont notées respectivement Va1, Vb1, Vc1, les tensions de chacune des trois phases de la deuxième tension polyphasée étant notées respectivement Va2, Vb2, Vc2.

Dans l'exemple de la figure 2, le dispositif principal d'alimentation 20 est configuré pour générer la première tension polyphasée avec une première composante homopolaire, et pour générer la deuxième tension polyphasée avec une deuxième composante homopolaire, au moins l'une des première et deuxième composantes homopolaires étant non nulle. La tension de la première composante homopolaire est notée Vo1, et son courant est noté Io1. La tension de la deuxième composante homopolaire est notée Vo2, et son courant est noté Io2.

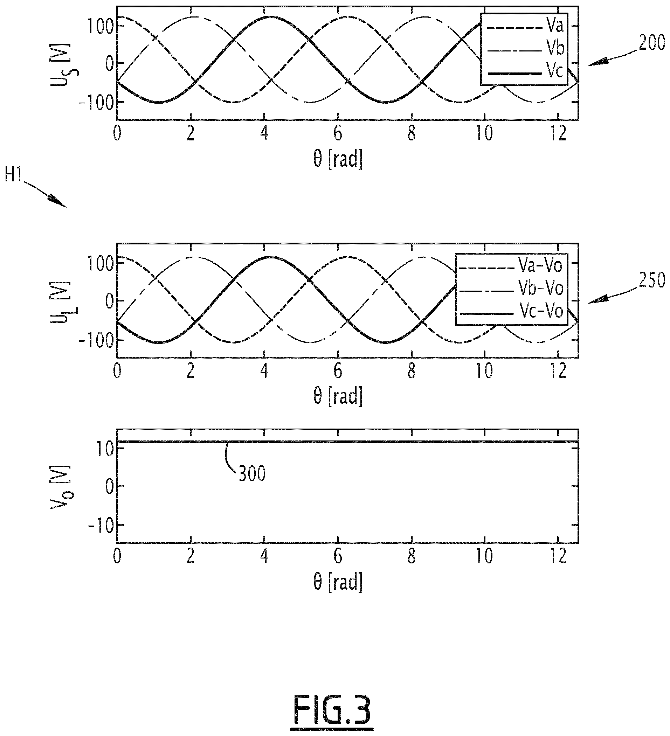

Dans l'exemple de la figure 3, le dispositif principal d'alimentation 20 est configuré pour générer la tension polyphasée avec une composante homopolaire continue. La figure 3 montre alors un premier ensemble 200 de courbes de tension pour les différentes phases de la tension polyphasée fournie par le dispositif principal 20, un deuxième ensemble 250 de courbes représentatives des tensions aux bornes des enroulements 30 de la charge électrique 12, ainsi qu'une courbe 300 représentative de la composante homopolaire de la tension polyphasée, selon un premier exemple H1 où la composante homopolaire est continue.

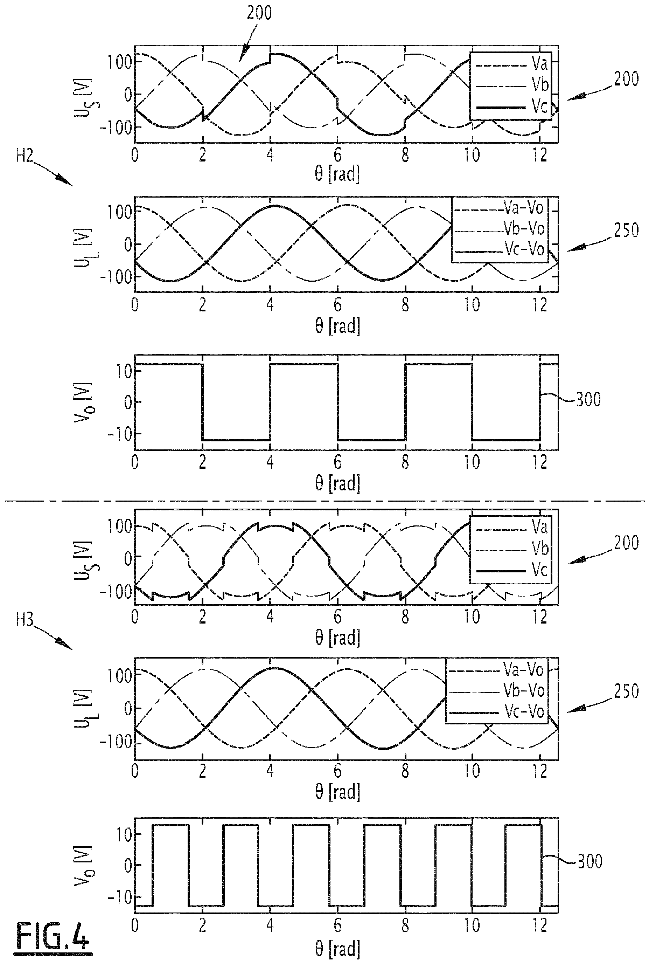

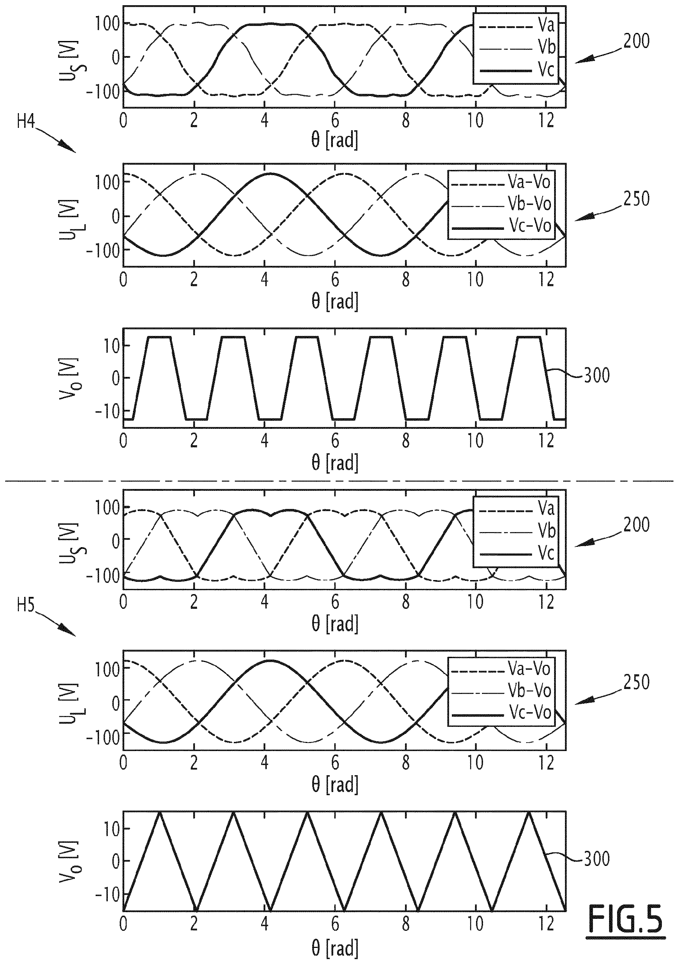

Dans l'exemple de la figure 3, ainsi que dans les exemples subséquents des figures 4 et 5, la tension polyphasée correspond à la tension Us, la tension aux bornes des enroulements 30 de la charge électrique 12 correspond à la tension U_{L}, et la tension de la composante homopolaire correspond à la tension Vo, chacune de ces tensions étant exprimée en volts (V). Chacune de ces tensions est périodique, et les courbes de ces tensions sont alors fonction en abscisse d'une phase angulaire θ exprimée en radians (rad).

Dans les exemples des figures 4 et 5, le dispositif principal d'alimentation 20 est configuré pour générer la tension polyphasée avec une composante homopolaire alternative. Les exemples des figures 4 et 5 montrent alors le premier ensemble 200 de courbes de tension pour les différentes phases de la tension polyphasée, le deuxième ensemble 250 de courbes représentatives des tensions aux bornes des enroulements 30 de la charge électrique 12, ainsi que la courbe 300 représentative de la composante homopolaire de la tension polyphasée, selon différents exemples successifs où la composante homopolaire est alternative, à savoir selon un deuxième exemple H2, un troisième exemple H3, un quatrième exemple H4 et un cinquième exemple H5.

Dans les exemples des figures 4 et 5, le dispositif principal d'alimentation 20 est avantageusement configuré pour générer la tension polyphasée avec la composante homopolaire alternative présentant une tension de valeur moyenne nulle au cours d'une période de la tension polyphasée. Selon le deuxième exemple H2 ou le troisième exemple H3, la composante homopolaire alternative est en forme d'un signal rectangulaire de valeur moyenne nulle. Selon le quatrième exemple H4, la composante homopolaire alternative est en forme d'un signal trapézoïdal de valeur moyenne nulle. Selon le cinquième exemple H5, la composante homopolaire alternative est en forme d'un signal triangulaire de valeur moyenne nulle.

Selon le troisième exemple H3, le quatrième exemple H4 et le cinquième exemple H5, la composante homopolaire alternative est de valeur moyenne nulle et est en outre à une fréquence multiple de celle de la tension polyphasée, afin de limiter la tension maximale que doit fournir le dispositif principal d'alimentation 20 par rapport à un point neutre N du réseau électrique principal 14, sans impacter les tensions différentielles aux bornes de la charge électrique 12.

Selon le troisième exemple H3, le quatrième exemple H4 et le cinquième exemple H5, le dispositif principal d'alimentation 20 est configuré pour générer la tension polyphasée avec une composante homopolaire alternative présentant une composante fondamentale à trois fois la fréquence de la tension polyphasée pour augmenter la valeur crête des tensions différentielles aux bornes de la charge électrique 12. L'injection d'une harmonique de rang trois est connue dans l'état de l'art par exemple en anglais sous le nom « *Third Harmonic Injection ».*

Lorsque le réseau électrique principal 14 est un réseau continu apte à fournir une tension continue, le dispositif principal d'alimentation 20 est configuré pour convertir ladite tension continue en la tension polyphasée.

Lorsque le réseau électrique principal 14 comporte plusieurs sources élémentaires continues 36 suivant la première configuration C1 des exemples des figures 7 et 8, le dispositif principal d'alimentation 20 comporte par exemple plusieurs onduleurs monophasés 46, chaque onduleur monophasé 46 étant connecté à une source élémentaire continue 36 respective. Chaque source élémentaire continue 36 respective forme alors, avec l'onduleur monophasé 46 respectif qui lui est connecté en sortie, une source monophasée 48 respective. Autrement dit, le couple d'une source élémentaire continue 36 et d'un onduleur monophasé 46 respectif connecté en sortie de celle-ci forme une source monophasée 48 respective.

Dans l'exemple de la figure 7, le dispositif principal d'alimentation 20 est configuré pour générer une seule tension polyphasée, telle qu'une tension triphasée, et le dispositif principal d'alimentation 20 comporte alors P onduleurs monophasés 46 selon cet exemple de la première configuration C1, où P représente le nombre de phases de la tension polyphasée. Autrement dit, dans l'exemple de la première configuration C1 de la figure 7, l'ensemble principal d'alimentation 44 comporte P sources monophasées 48.

Dans l'exemple de la figure 8, le dispositif principal d'alimentation 20 est configuré pour générer la première tension polyphasée et la deuxième tension polyphasée, chacune étant par exemple une tension triphasée, et le dispositif principal d'alimentation 20 comporte alors 2*P onduleurs monophasés 46 selon cet exemple de la première configuration C1, où P représente le nombre de phases de chaque tension polyphasée. Autrement dit, selon cet exemple de la première configuration C1 de la figure 8, l'ensemble principal d'alimentation 44 comporte 2*P sources monophasées 48.

Lorsque le réseau électrique principal 14 comporte plusieurs sources élémentaires continues 36 selon la première configuration C1 des exemples des figures 7 et 8, le dispositif principal d'alimentation 20 comporte en variante un module de reconfiguration dynamique, non représenté, le module de reconfiguration dynamique étant configuré pour générer la tension polyphasée via une reconfiguration dynamique des sources élémentaires continues 36. Un tel module de reconfiguration dynamique est décrit dans le document WO 2013/110649 A2 ou encore dans les documents US 10,044,069 B2 et US 2014/287278 A1. Un tel module de reconfiguration dynamique comporte typiquement des interrupteurs formant des ponts de commutation, tels que des ponts en H, afin de générer la tension polyphasée à partir des sources élémentaires continues 36. A titre d'exemple, le module de reconfiguration dynamique est décrit dans le document US 10,044,069 B2 en regard des figures 38 et 39, aux troisième et quatrième paragraphes de la colonne 31, où les interrupteurs des ponts de commutation sont référencés avec les numéros 86 à 89. Dans cet exemple des figures 38 et 39 du document US 10,044,069 B2, les trois sources élémentaires continues sont référencées avec le numéro 116, et avec le module de reconfiguration dynamique elles forment alors un dispositif triphasé complet, c'est-à-dire un réseau triphasé, le réseau électrique principal 14 étant alors ledit réseau triphasé ; le module de reconfiguration dynamique comprenant les ponts de commutation avec les interrupteurs référencés avec les numéros 86 à 89, comme décrit ci-dessus.

Suivant cette variante de la première configuration C1, lorsque le dispositif principal d'alimentation 20 est configuré pour générer une seule tension polyphasée, comme dans l'exemple de la figure 7, le dispositif principal d'alimentation 20 comporte un seul module de reconfiguration dynamique.

Suivant cette variante de la première configuration C1, lorsque le dispositif principal d'alimentation 20 est configuré pour générer plusieurs tensions polyphasées, telles que la première tension polyphasée et la deuxième tension polyphasée, comme dans l'exemple de la figure 8, le dispositif principal d'alimentation 20 comporte de préférence plusieurs modules de reconfiguration dynamique, à savoir un module de reconfiguration dynamique pour chaque tension polyphasée à générer.

Lorsque le réseau électrique principal 14 comporte une unique source continue 40 suivant la deuxième configuration C2 des exemples des figures 7 et 8, le dispositif principal d'alimentation 20 comporte typiquement un onduleur polyphasé 50 apte à générer la tension polyphasée à partir de ladite source continue 40. Le dispositif principal d'alimentation 20 comporte typiquement un onduleur polyphasé 50 pour chaque tension polyphasée à générer.

Dans l'exemple de la figure 7, le dispositif principal d'alimentation 20 est configuré pour générer une seule tension polyphasée, telle qu'une tension triphasée, et le dispositif principal d'alimentation 20 comporte un seul onduleur polyphasé 50 selon cet exemple de la deuxième configuration C2 à la figure 7.

Dans l'exemple de la figure 8, le dispositif principal d'alimentation 20 est configuré pour générer deux tensions polyphasées, à savoir la première tension polyphasée et la deuxième tension polyphasée, et le dispositif principal d'alimentation 20 comporte deux onduleurs polyphasés 50 selon cet exemple de la deuxième configuration C2 à la figure 8, à savoir un premier onduleur polyphasé 50A pour générer la première tension polyphasée et un deuxième onduleur polyphasé 50B pour générer la deuxième tension polyphasée.

Comme connu en soi, chaque onduleur polyphasé 50 comportent typiquement P branches de commutation 52, c'est-à-dire une branche de commutation 52 pour chaque phase de la tension polyphasée à générer, et chaque branche de commutation 52 comporte deux interrupteurs 54 connectés en série et entre eux en un point intermédiaire 56, en lequel la phase correspondante de la tension polyphasée est délivrée.

Le dispositif auxiliaire d'alimentation électrique 25 est configuré pour alimenter le réseau électrique auxiliaire 28, le réseau électrique auxiliaire 28 comportant une première borne d'alimentation 60 et une deuxième borne d'alimentation 62.

Selon l'invention, le dispositif auxiliaire d'alimentation 25 comprend un module 65 de raccordement de la première borne d'alimentation 60 au point milieu 32 et de la deuxième borne d'alimentation 62 à un point de référence 68, tel que le point neutre N du réseau principal 14, également appelé neutre N.

En complément facultatif, le dispositif auxiliaire d'alimentation 25 comprend un module d'isolation électrique 70 connecté en sortie du module de raccordement 65 et destiné à être connecté en entrée du réseau électrique auxiliaire 28.

Le réseau électrique auxiliaire 28 est un réseau continu apte à fournir une tension continue. La tension continue d'alimentation du réseau électrique auxiliaire 28 est typiquement inférieure ou égale à 48 V, et de préférence comprise entre 12 V et 48 V. La tension continue du réseau auxiliaire est par exemple généralement de l'ordre de 12 V lorsque le véhicule à bord duquel l'installation électrique 10 est apte à être embarquée est une voiture, et de l'ordre de 24 à 28 V lorsque ledit véhicule est un camion.

La tension continue du réseau électrique auxiliaire 28 est de manière plus générale une tension de valeur bien plus faible que celle du réseau électrique principal 14. Le ratio entre la tension maximale du réseau électrique auxiliaire 28 et la tension maximale du réseau électrique principal 14 est typiquement inférieur à un quart.

La première borne d'alimentation 60 est par exemple une borne de polarité positive, et la deuxième borne d'alimentation 62 est par exemple une borne de polarité négative.

Le module de raccordement 65 est configuré pour raccorder la première borne d'alimentation 60 avec le point milieu 32 et la deuxième borne d'alimentation 62 avec le point de référence 68, afin d'alimenter le réseau électrique auxiliaire 28 via l'au moins une composante homopolaire non nulle, la composante homopolaire respective étant issue du point milieu 32.

Dans l'exemple de la figure 2, le dispositif principal d'alimentation 20 est configuré pour générer deux tensions polyphasées, à savoir la première tension polyphasée et la deuxième tension polyphasée, et le module de raccordement 65 est alors configuré pour raccorder la première borne d'alimentation 60 avec le premier point milieu 32A et la deuxième borne d'alimentation 62 avec le deuxième point milieu 32B, le deuxième point milieu 32B formant le point de référence 68, pour alimenter le réseau électrique auxiliaire 28 via la première composante homopolaire issue du premier point milieu 32A et via la deuxième composante homopolaire issue du deuxième point milieu 32B.

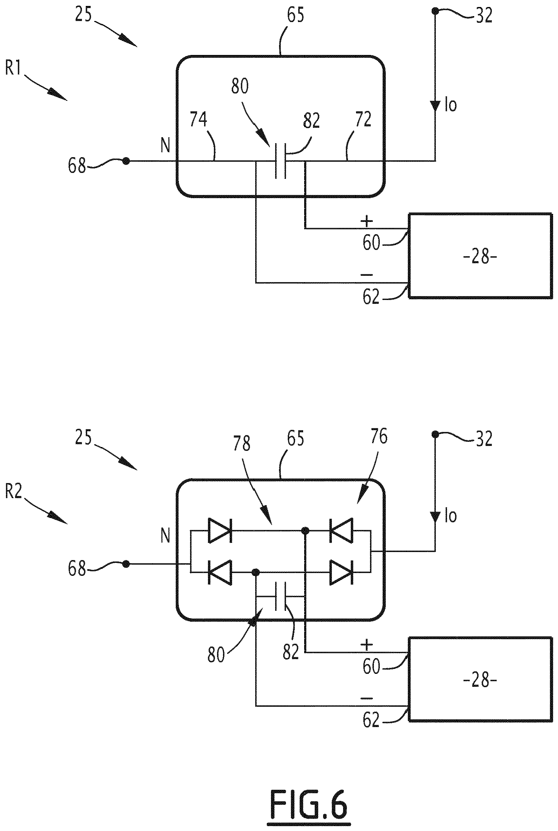

Lorsque la ou chaque composante homopolaire générée par le dispositif principal d'alimentation 20 est continue, le module de raccordement 65 est typiquement configuré pour connecter directement la première borne d'alimentation 60 avec le point milieu 32, et respectivement directement la deuxième borne d'alimentation 62 avec le point de référence 68, comme représenté dans un premier exemple de raccordement R1 à la figure 6.

Dans le premier exemple de raccordement R1, le module de raccordement 65 comporte alors une première liaison 72 de connexion du point milieu 32 à la première borne d'alimentation 60, et une deuxième liaison 74 de connexion du point de référence 68 à la deuxième borne d'alimentation 62.

Lorsque la ou chaque composante homopolaire générée par le dispositif principal alimentation 20 est alternative, le module de raccordement 65 comporte un redresseur 76 adapté pour convertir la ou chaque composante homopolaire alternative en une tension continue délivrée au réseau électrique auxiliaire 28, comme représenté dans un deuxième exemple de raccordement R2 à la figure 6. Le redresseur 76 comporte par exemple un pont de diodes 78. En variante, le redresseur 76 est un redresseur actif, comportant comme connu en soi des interrupteurs commandables, tels que des transistors, en particulier des transistors à effet de champ à grille isolée, également appelés MOSFET (de l'anglais *Metal Oxide Semiconductor Field Effect Transistor).*

L'homme du métier observera que le module de raccordement 65 est alors configuré pour raccorder la première borne d'alimentation 60 au point milieu 32, et respectivement la deuxième borne d'alimentation 62 au point de référence 68, de manière directe lorsque la composante homopolaire générée par le dispositif principal d'alimentation 20 est continue, et de manière indirecte, typiquement via le redresseur 76, lorsque la composante homopolaire générée par le dispositif principal d'alimentation 20 est alternative.

En complément facultatif, aussi bien du premier exemple de raccordement R1 où la composante homopolaire est continue, que celui du deuxième exemple de raccordement R2 où la composante homopolaire est alternative, le module de raccordement 65 comporte en outre un élément capacitif 80, l'élément capacitif 80 étant apte à être connecté entre la première borne d'alimentation 60 et la deuxième borne d'alimentation 62. L'élément capacitif 80 permet de limiter les ondulations de tension en entrée du réseau électrique auxiliaire 28. L'élément capacitif 80 est par exemple un condensateur 82 et/ou une batterie auxiliaire, non représentée.

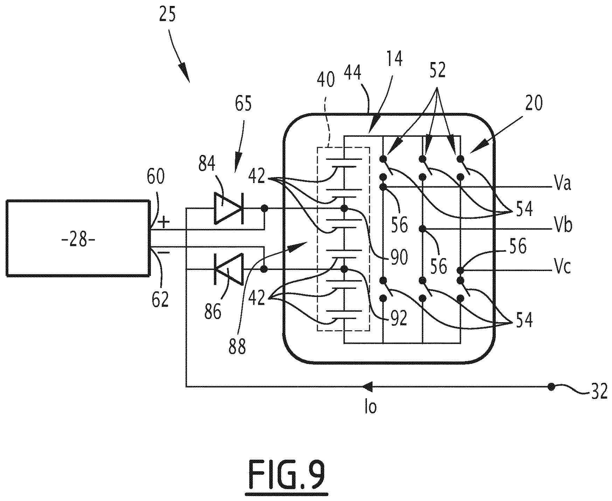

En variante du deuxième exemple de raccordement R2, lorsque la ou chaque composante homopolaire est alternative et que la source continue 40 comporte un ensemble de plusieurs cellules continues 42, telles que des cellules de batterie, connectées en série, le module de raccordement 65 comporte une première diode 84 et une deuxième diode 86, connectées à un groupe 88 de certaines cellules continues 42 de l'ensemble, le groupe 88 présentant des première 90 et deuxième 92 extrémités, comme représenté sur la figure 9. La première diode 84 est alors par exemple connectée par sa cathode à la première extrémité 90 et par son anode au point milieu 32 pour recevoir la ou chaque composante homopolaire. La deuxième diode 86 est alors par exemple connectée par son anode à la deuxième extrémité 92 et par sa cathode au point milieu 32 pour recevoir la ou chaque composante homopolaire. Le module de raccordement 65 est configuré en outre pour connecter la première borne d'alimentation 60 avec la première extrémité 90 et la deuxième borne d'alimentation 62 avec la deuxième extrémité 92.

Cette variante permet de mutualiser une partie des cellules continues 42 entre la source continue 40 du réseau électrique principal 14 et l'alimentation continue du réseau électrique auxiliaire 28. Cette variante permet alors par exemple de supprimer une batterie auxiliaire de 12 ou 24 V à bord d'un véhicule électrique, lorsque le système d'alimentation électrique 15 est embarqué à bord du véhicule.

Le point de référence 68 est par exemple relié à une borne d'une source élémentaire continue 36 respective. Dans l'exemple de la figure 7 selon la première configuration C1, les sources élémentaires continues 36 sont connectées entre elles en une borne commune, et le point de référence 68 est alors avantageusement relié à ladite borne commune aux sources élémentaires continues 36.

En variante, le point de référence 68 est par exemple relié à une borne de la source continue 40. Dans l'exemple de la figure 7 selon la deuxième configuration C2, l'unique source continue 40 est formée de l'ensemble de plusieurs cellules continues 42, et le point de référence 68 est alors avantageusement relié à une borne d'une cellule continue 42 respective, le point de référence 68 étant typiquement un point entre deux des cellules continues 42.

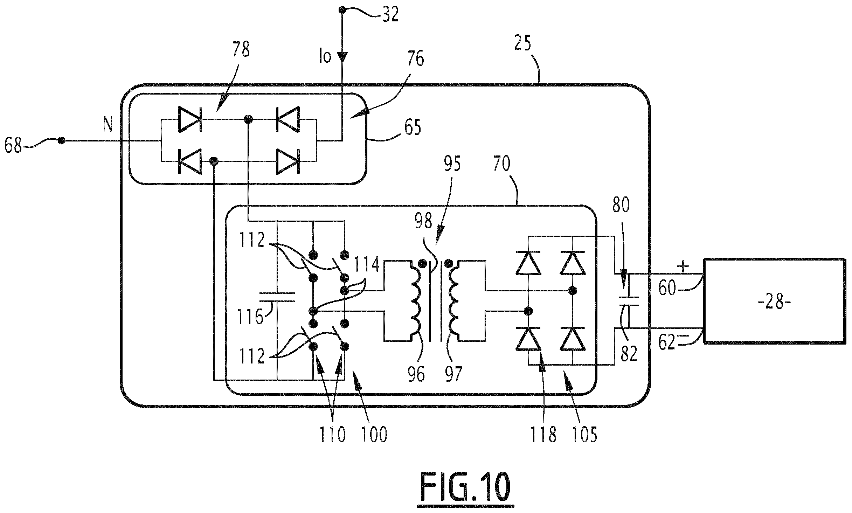

En complément facultatif, le module d'isolation électrique 70 comporte par exemple un transformateur électrique 95 avec au moins un enroulement primaire 96 et au moins un enroulement secondaire 97 enroulé autour d'un noyau magnétique 98, comme représenté sur la figure 10.

Selon ce complément facultatif, le module d'isolation électrique 70 comporte alors typiquement en outre un onduleur auxiliaire 100 connecté au(x) enroulement(s) primaire(s) 96 et un redresseur auxiliaire 105 connecté au(x) enroulement(s) secondaire(s) 97.

Dans l'exemple de la figure 10, l'onduleur auxiliaire 100 comporte deux branches auxiliaires de commutation 110, c'est-à-dire une branche auxiliaire de commutation 110 pour chaque polarité de la tension continue issue du module de raccordement 65, l'onduleur auxiliaire 100 étant connecté en sortie du module de raccordement 65, tel qu'en sortie du redresseur 76. Chaque branche auxiliaire de commutation 110 comporte deux interrupteurs auxiliaires 112 connectés en série et entre eux en un point intermédiaire 114, en lequel la phase correspondante de la tension alternative issue de l'onduleur auxiliaire 100 est délivrée à l'enroulement primaire 96.

En complément, l'onduleur auxiliaire 100 comporte un condensateur de filtrage 116, connecté en parallèle des branches auxiliaires de commutation 110 et en amont de celles-ci, le condensateur de filtrage 16 étant destiné à filtrer la tension continue issue du module de raccordement 65.

Dans l'exemple de la figure 10, le redresseur auxiliaire 105 comporte un pont auxiliaire de diodes 118. Le pont auxiliaire de diodes 118 est alors connecté entre l'enroulement secondaire 97 et le réseau électrique auxiliaire 28, ou encore entre l'enroulement secondaire 97 et l'élément capacitif 80 lorsque celui-ci est présent entre les première et deuxième bornes d'alimentation 60, 62 du réseau électrique auxiliaire 28.

Dans l'exemple de la figure 11, comme indiqué précédemment, la charge électrique 12 est en particulier le moteur synchrone avec l'excitation bobinée 34, et le dispositif auxiliaire d'alimentation 25 est avantageusement adapté pour alimenter en outre l'excitation bobinée 34 du moteur synchrone. Selon cet exemple, l'excitation bobinée 34 du moteur synchrone est alors connectée au dispositif auxiliaire d'alimentation 25, en lieu et place du réseau électrique auxiliaire 28, ou encore en parallèle dudit réseau électrique auxiliaire 28.

Dans cet exemple de la figure 11, le module de raccordement 65 est typiquement identique au module de raccordement 65 selon le deuxième exemple de raccordement R2 à la figure 6. Le module de raccordement 65 comporte alors par exemple le redresseur 76 sous forme du pont de diodes 78 et l'élément capacitif 80 sous forme du condensateur 82, et l'excitation bobinée 34 est connectée aux bornes de l'élément capacitif 80.

Chacun des interrupteurs 54 et des interrupteurs auxiliaires 112, ou encore des interrupteurs du redresseur 76 lorsqu'il est actif, est de préférence un interrupteur monodirectionnel en tension. Chacun desdits interrupteurs comporte par exemple un transistor et une diode intrinsèque en antiparallèle du transistor. Le transistor est, par exemple, un transistor à effet de champ à grille isolée, également appelé MOSFET (de l'anglais *Métal Oxide Semiconductor Field Effect Transistor),* ou un transistor bipolaire, ou encore un thyristor.

Ainsi, l'invention consiste à piloter la tension polyphasée générée par le dispositif principal d'alimentation 20 de manière à avoir une composante homopolaire non nulle, puis à utiliser ladite composante homopolaire pour alimenter le réseau électrique auxiliaire 28.

Par composante homopolaire non nulle, on entend une composante homopolaire qui n'est pas constante à une valeur nulle par rapport au point de référence 68, ladite composante homopolaire alternative pouvant néanmoins présenter une tension de valeur moyenne nulle sur une période de la tension polyphasée. L'homme du métier comprendra que la composante homopolaire ainsi obtenue n'est pas constamment nulle, tout en pouvant être de valeur moyenne nulle au cours de la période de la tension polyphasée.

Autrement dit, le système d'alimentation électrique 15 selon l'invention est configuré pour alimenter à la fois l'au moins une charge électrique 12 via la tension polyphasée générée par le dispositif principal d'alimentation 20, et en outre le réseau électrique auxiliaire 28 via le dispositif auxiliaire d'alimentation 25 exploitant la composante homopolaire non nulle associée à ladite tension polyphasée.

Cela permet alors d'éviter d'utiliser un convertisseur de puissance pour alimenter le réseau électrique auxiliaire 28 à partir du réseau électrique principal 14 de tension bien plus élevée que celle nécessaire pour le réseau électrique auxiliaire 28. En effet, même lorsque la composante homopolaire est alternative, et que le module de raccordement 65 du dispositif auxiliaire d'alimentation 25 comporte alors le redresseur 76, tel que le pont de diodes 78, le redresseur 76 est un redresseur opérant à basse tension et nécessitant alors seulement des composants basse tension, tels que les diodes du pont de diodes 78, et non des composants de tension élevée (>150V).

En outre, lorsque l'au moins une charge électrique 12 est un moteur électrique, l'inductance du moteur électrique permet un filtrage efficace du courant ou de l'attention, ce qui limite ou supprime le besoin d'une inductance supplémentaire, en comparaison avec un convertisseur de puissance continu-continu de l'état de la technique.

L'homme du métier observera en outre que la composante homopolaire et contrôlable indépendamment du régime de fonctionnement de la charge 12, tel que le moteur, et le dispositif principal d'alimentation 20 est alors adapté pour contrôler la valeur de la composante homopolaire indépendamment du régime de fonctionnement de la charge 12. Par régime de fonctionnement de la charge, on entend un point de fonctionnement de la charge qui nécessite à chaque instant une certaine amplitude et une certaine fréquence de la tension (ou du courant) polyphasé. Ce point de fonctionnement évolue dans le temps, par exemple en fonction d'un couple et d'une vitesse moteur dans le cas d'une charge de type moteur polyphasé, qui nécessite alors un pilotage dynamique de l'amplitude et de la fréquence de la tension/courant polyphasé(e) d'alimentation.

En complément, lorsque la tension ou le courant de la composante homopolaire alternative est de valeur moyenne nulle sur la période de la tension polyphasée générée par le dispositif principal d'alimentation 20, cela permet de conserver un meilleur équilibre du réseau électrique principal 14, et en particulier limite un éventuel risque de déséquilibre entre une partie haute et une partie basse du réseau électrique principal 14 par rapport au point de référence 68, tel que le point neutre N.

En outre, lorsque le réseau électrique principal 14 comporte plusieurs sources élémentaires continues 36 selon la première configuration C1 des exemples des figures 7 et 8, cela offre davantage de souplesse de mise en oeuvre, les sources élémentaires continues 36 étant par exemple de type distinct, telles que des batteries, des capacités ou des panneaux photovoltaïques, et chacune des phases de la tension polyphasée dispose alors ainsi d'un stockage d'énergie et d'un onduleur monophasé 46 associée. En outre, un branchement en étoile des trois sources élémentaires continues 36, formant ensuite avec les onduleurs monophasés 46 qui leur sont connectés respectivement trois sources monophasées 48, permet d'obtenir facilement le point de référence 68, tel que le point neutre N.

Par point de référence 68, on entend un point qui peut être différent du point central (neutre N), en particulier si le nombre de cellules continues 42 connectées en série est un nombre impair, le point de référence 68 étant un point entre deux des cellules continues 42, et étant alors nécessairement un peu décalé par rapport au point neutre N. La composante homopolaire est déterminée par rapport à ce point de référence 68.

En complément, lorsque le dispositif auxiliaire d'alimentation 25 comporte le module d'isolation électrique 70, cela permet d'offrir en outre une isolation galvanique entre le réseau électrique auxiliaire 28 et le réseau électrique principal 14. Selon ce complément, lorsque le module d'isolation électrique 70 comporte l'onduleur auxiliaire 100 en amont du transformateur électrique 95, cela permet d'augmenter la fréquence de modulation de la tension en entrée du transformateur 95 et de diminuer alors la taille de celui-ci. L'onduleur auxiliaire 100 peut également servir d'abaisseur de tension pour obtenir un courant homopolaire plus faible à puissance égale, et ainsi réduire les pertes par effet Joule, ainsi qu'une éventuelle saturation dans la charge électrique 12, telle qu'une saturation magnétique dans le moteur lorsque la charge électrique 12 est un moteur.

En variante de la tension de valeur moyenne nulle pour la composante homopolaire alternative, la composante homopolaire alternative présente un courant de valeur moyenne nulle sur une période temporelle. En particulier, le courant moyen est sensiblement nul par rapport au point de référence 68 de sorte à ne pas créer de déséquilibre entre une partie haute et une partie basse du réseau électrique principal 14 par rapport au point de référence 68. Ce courant moyen sensiblement nul est obtenu en ajustant la proportion du temps où la composante homopolaire est positive ou négative par rapport au point de référence 68.

La moyenne de la composante homopolaire alternative n'est pas nécessairement calculée sur la période de la tension polyphasée, et est plus généralement calculée pour une période temporelle donnée.

La période temporelle est par exemple la période de la tension polyphasée, comme décrit ci-dessus.

En variante, la période temporelle est une portion temporelle d'un cycle de décharge d'une batterie électrique lorsqu'elle forme le réseau électrique principal 14. La période temporelle est alors par exemple une durée prédéfinie de quelques minutes, un demi-cycle de décharge, ou encore le cycle complet de décharge.

Dans les exemples des figures 4 et 5, la fréquence de la composante homopolaire est égale à la fréquence de la tension polyphasée ou à un multiple de cette fréquence. C'est avantageux, notamment pour maximiser l'amplitude de tension polyphasée.

En variante, la fréquence de la composante homopolaire est une fréquence plus basse, par exemple de l'ordre du Hz, du dixième de Hz, ou encore du centième de Hz, ceci notamment pour limiter la fréquence de la tension sur le module de raccordement 65 ou encore faciliter le pilotage de la tension polyphasée.

Selon cette variante, dans le cas de l'utilisation du redresseur 76 sous forme du pont de diodes 78, l'utilisation d'une fréquence plus faible permet notamment de limiter les pertes. Cette faible fréquence permet aussi de réduire les perturbations hautes fréquences qui peuvent poser problème en terme de compatibilité électromagnétique, ou CEM.

Dans les exemples de la figure 7, le point de référence 68 est un point sensiblement milieu entre des potentiels fournis par le réseau électrique principal 14.

Par point sensiblement milieu, on entend typiquement un point ayant pour potentiel une moyenne des potentiels fournis par le réseau électrique principal à plus ou moins 30% du potentiel maximal parmi lesdits potentiels fournis.

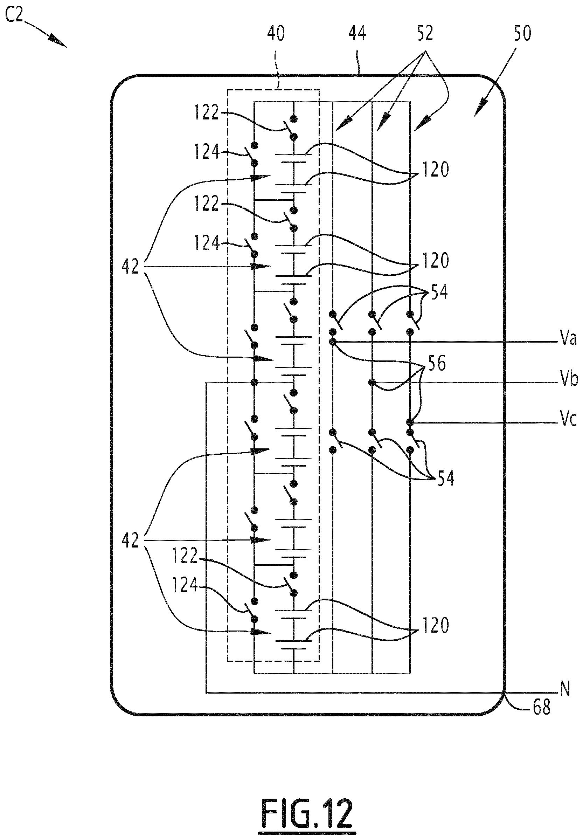

La figure 12 illustre un autre exemple de réalisation du dispositif principal d'alimentation 20 et du réseau électrique principal 14 forment l'ensemble principal d'alimentation 44, où le point de référence 68 est un point sensiblement milieu entre les potentiels fournis par le réseau électrique principal 14.

Dans l'exemple de la figure 12, et de manière analogue à la deuxième configuration C2 de l'exemple de la figure 7, le réseau électrique principal 14 comporte l'unique source continue 40, formée de l'ensemble de plusieurs cellules continues 42, telles que des cellules de batterie, connectées en série.

Dans l'exemple de la figure 12, chaque cellule continue 42 comporte alors typiquement une ou plusieurs cellules de batterie 120 connectées en série avec un interrupteur primaire 122, formant un agencement série. Chaque cellule continue 42 comporte en outre un interrupteur secondaire 124 connecté en parallèle dudit agencement série formé de la ou des cellules de batterie 120 et de l'interrupteur primaire 122.

Comme connu en soi, les interrupteurs primaires 122 et secondaires 124 permettent alors de gérer une configuration des cellules de batterie 120 connectées en série pour former la source continue 40, et également le positionnement du point de référence 68 par rapport aux potentiels fournis par la source continue 40 formant le réseau électrique principal 14, c'est-à-dire de gérer le positionnement du point de référence 68 par rapport aux potentiels aux extrémités de la source continue 40.

En particulier, les interrupteurs primaires 122 et secondaires 124 permettent d'avoir le point de référence 68 légèrement décalé par rapport au milieu de la tension délivrée par la source continue 40. Autrement dit, selon la configuration de la source continue 40, et en particulier selon la position ouverte ou fermée des interrupteurs primaires 122 et secondaires 124 respectifs, le point de référence 68 est susceptible d'être décalé vers le bas ou le haut selon le nombre respectif de cellules continues 42 connectées en série en-dessous et au-dessus de ce point de référence 68, ce qui confère un degré de réglage supplémentaire. Ce réglage peut en outre permettre une augmentation de la tension disponible sur le réseau auxiliaire 28, ceci sans augmenter la valeur ou l'amplitude de la composante homopolaire.

## Revendications

1. Système d'alimentation électrique (15) comprenant :
- un dispositif principal d'alimentation électrique (20) configuré pour générer, à partir d'un réseau électrique principal (14), au moins une tension polyphasée afin d'alimenter au moins une charge électrique (12) ;
la ou chaque charge électrique (12) comportant un enroulement (30) pour chaque phase de la tension polyphasée respective, les enroulements (30) étant connectés entre eux en un point milieu (32), selon une connexion en étoile ;
- un dispositif auxiliaire d'alimentation électrique (25) configuré pour alimenter un réseau électrique auxiliaire (28), le réseau électrique auxiliaire (28) comportant une première (60) et une deuxième (62) bornes d'alimentation ;
**caractérisé en ce que** le dispositif principal d'alimentation (20) est configuré pour générer l'au moins une tension polyphasée avec au moins une composante homopolaire non nulle, et
**en ce que** le dispositif auxiliaire d'alimentation (25) comprend un module de raccordement (65) configuré pour raccorder la première borne d'alimentation (60) avec le point milieu (32) et la deuxième borne d'alimentation (62) avec un point de référence (68), pour alimenter le réseau électrique auxiliaire (28) via l'au moins une composante homopolaire non nulle, la composante homopolaire respective étant issue du point milieu (32).

2. Système (15) selon la revendication 1, dans lequel le dispositif principal d'alimentation (20) est configuré pour générer une première, et respectivement une deuxième, tensions polyphasées afin d'alimenter une première (12A), et respectivement une deuxième (12B), charges électriques, les enroulements (30) de la première charge (12A) étant connectés en étoile en un premier point milieu (32A) et les enroulements (30) de la deuxième charge (12B) étant connectés en étoile en un deuxième point milieu (32B), le dispositif principal d'alimentation (20) étant configuré pour générer la première tension polyphasée avec une première composante homopolaire, et pour générer la deuxième tension polyphasée avec une deuxième composante homopolaire, au moins l'une des première et deuxième composantes homopolaires étant non nulle,
dans lequel le module de raccordement (65) est alors configuré pour raccorder la première borne d'alimentation (60) avec le premier point milieu (32) et la deuxième borne d'alimentation (62) avec le deuxième point milieu (32), le deuxième point milieu (32) formant le point de référence (68), pour alimenter le réseau électrique auxiliaire (28) via la première composante homopolaire issue du premier point milieu (32) et via la deuxième composante homopolaire issue du deuxième point milieu (32).

3. Système (15) selon la revendication 1, dans lequel le point de référence (68) est un point sensiblement milieu entre des potentiels fournis par le réseau électrique principal (14) ;
le point sensiblement milieu ayant de préférence pour potentiel une moyenne des potentiels fournis par le réseau électrique principal (14) à plus ou moins 30% du potentiel maximal parmi lesdits potentiels fournis.

4. Système (15) selon l'une quelconque des revendications précédentes, dans lequel le réseau électrique auxiliaire (28) est un réseau électrique continu ;
la tension continue d'alimentation du réseau électrique auxiliaire (28) étant de préférence comprise entre 12 V et 48 V.

5. Système (15) selon la revendication 4, dans lequel la ou chaque composante homopolaire générée par le dispositif principal d'alimentation (20) est continue, et le module de raccordement (65) est configuré pour connecter directement la première borne d'alimentation (60) avec le point milieu (32) et la deuxième borne d'alimentation (62) avec le point de référence (68).

6. Système (15) selon la revendication 4, dans lequel la ou chaque composante homopolaire générée par le dispositif principal alimentation (20) est alternative, et le module de raccordement (65) comporte un redresseur (76) adapté pour convertir la ou chaque composante homopolaire alternative en une tension continue délivrée au réseau électrique auxiliaire (28) ;
le redresseur (76) comportant de préférence un pont de diodes (78).

7. Système (15) selon l'une quelconque des revendications précédentes, dans lequel le dispositif auxiliaire d'alimentation (25) comprend en outre un module d'isolation électrique (70) connecté en sortie du module de raccordement (65) et destiné à être connecté en entrée du réseau électrique auxiliaire (28), le module d'isolation électrique (70) comportant un transformateur électrique (95) avec au moins un enroulement primaire (96) et au moins un enroulement secondaire (97), un onduleur auxiliaire (100) connecté au(x) enroulement(s) primaire(s) (96) et un redresseur auxiliaire (105) connecté au(x) enroulement(s) secondaire(s) (97).

8. Installation électrique (10) comprenant au moins une charge électrique (12), un réseau électrique principal (14) et un système d'alimentation électrique (15),
**caractérisé en ce que** le système d'alimentation électrique (15) est selon l'une quelconque des revendications précédentes ; le dispositif principal d'alimentation (20) étant connecté entre le réseau électrique principal (14) et l'au moins une charge électrique (12) pour l'alimenter avec l'au moins une tension polyphasée générée ; la ou chaque charge électrique (12) comportant un enroulement (30) pour chaque phase de la tension polyphasée respective, les enroulements (30) étant connectés entre eux en un point milieu (32), selon une connexion en étoile.

9. Installation (10) selon la revendication 8, dans laquelle le dispositif principal d'alimentation (20) est configuré pour générer la tension polyphasée avec une composante homopolaire alternative ;
le dispositif principal d'alimentation (20) étant de préférence configuré pour générer la tension polyphasée avec la composante homopolaire alternative présentant une tension ou un courant de valeur moyenne nulle sur une période temporelle ;
la période temporelle étant de préférence encore une période de la tension polyphasée ou une portion temporelle d'un cycle de décharge du réseau électrique principal (14) lorsqu'il est en forme d'une batterie ; la portion temporelle étant par exemple choisie parmi : une durée prédéfinie de quelques minutes, un demi-cycle de décharge et le cycle de décharge.

10. Installation (10) selon la revendication 8 ou 9, dans laquelle le réseau électrique principal (14) est un réseau continu apte à fournir une tension continue, et le dispositif principal d'alimentation (20) est configuré pour convertir ladite tension continue en la tension polyphasée.

11. Installation (10) selon la revendication 10, dans laquelle le réseau électrique principal (14) comporte plusieurs sources élémentaires continues (36), et le dispositif principal d'alimentation (20) comporte plusieurs onduleurs monophasés (46), chacun étant connecté à une source élémentaire continue (36) respective ;
le point de référence (68) étant de préférence relié à une borne d'une source élémentaire continue (36) respective ;
le point de référence (68) étant de préférence encore relié à une borne commune aux sources élémentaires continues (36).

12. Installation (10) selon la revendication 10, dans laquelle le réseau électrique principal (14) comporte plusieurs sources élémentaires continues (36), et le dispositif principal d'alimentation (20) comporte un module de reconfiguration dynamique adapté pour générer la tension polyphasée via une reconfiguration dynamique des sources élémentaires continues ;
le point de référence (68) étant de préférence relié à une borne d'une source élémentaire continue (36) respective ;
le point de référence (68) étant de préférence encore relié à une borne commune aux sources élémentaires continues (36).

13. Installation (10) selon la revendication 10, dans laquelle le réseau électrique principal (14) comporte une unique source continue (40), et le dispositif principal d'alimentation (20) comporte un onduleur polyphasé (50) apte à générer la tension polyphasée à partir de ladite source continue (40) ;
le point de référence (68) étant de préférence relié à une borne de la source continue (40).

14. Installation (10) selon la revendication 12, dans laquelle la ou chaque composante homopolaire est alternative ; la source continue (40) comporte un ensemble de plusieurs cellules continues (42), telles que des cellules de batterie, connectées en série ; et dans lequel le module de raccordement (65) comporte une première diode (84) et une deuxième diode (86), connectées à un groupe (88) de certaines cellules continues (42) de l'ensemble, le groupe (88) présentant des première (90) et deuxième (92) extrémités, la première diode (84) étant connectée par sa cathode à la première extrémité (90) et par son anode au point milieu (32) pour recevoir la ou chaque composante homopolaire ; la deuxième diode (86) étant connectée par son anode à la deuxième extrémité (92) et par sa cathode au point milieu (32) pour recevoir la ou chaque composante homopolaire ; et le module de raccordement (65) étant configuré en outre pour connecter la première borne d'alimentation (60) avec la première extrémité (90) et la deuxième borne d'alimentation (62) avec la deuxième extrémité (92) ;
le point de référence (68) étant de préférence relié à une borne d'une cellule continue (42) respective.

15. Installation (10) selon l'une quelconque des revendications 8 à 13, dans laquelle la ou chaque charge électrique (12) est un moteur électrique comportant un rotor et un stator, les enroulements (30) connectés en étoile étant les enroulements du stator ;
le moteur électrique étant notamment un moteur synchrone avec un rotor bobiné (34), dit excitation bobinée, et le dispositif auxiliaire d'alimentation (25) étant alors de préférence configuré pour alimenter en outre le rotor bobiné (34) du moteur synchrone.
